# EUROPEAN PATENT SPECIFICATION

(11) **EP 3 040 551 B1**
(45) Date of publication and mention of the grant of the patent: **28.02.2018**
(21) Application number: 15150087.3
(22) Date of filing: 05.01.2015
(51) Int. Cl.: F03D 1/06

(54) **Coupling arrangement in the field of wind turbines**
Kupplungsanordnung auf dem Gebiet von Windturbinen
Système de connection dans le domaine des éoliennes

(43) Date of publication of application: 06.07.2016
(73) Proprietor: Siemens Aktiengesellschaft, 80333 München (DE)
(72) Inventor: Moeller, Jesper, 7330 Brande (DK); Svinth, Kenneth Helligsoe, 8000 Aarhus C (DK)

(56) References cited:
- EP-A1- 2 677 166
- EP-A2- 2 535 559
- WO-A1-2016/040144
- CA-A1- 2 861 499
- CN-A- 103 670 910
- US-A1- 2002 146 299

## Description

The present invention relates to a coupling arrangement in the field of wind turbines, to a wind turbine and to a method for assembling said coupling arrangement.

Installation of wind turbines involves mounting of large components, in particular rotor blades, in hazardous environments, e.g. far out at sea. Compliance with work safety regulations may demand absence of technical personnel in the hub while (initially) fastening the rotor blades to the hub.

Document EP 2 677 166 A1 describes a wind turbine blade with means for hoisting at the blade root and a method of hoisting a blade. A rotor assembly for a wind turbine comprises a hub, a blade provided with a blade root portion and a strengthener for the blade root portion. The strengthener comprises a supporting part that strengthens the blade root portion. The supporting part comprises a supporting portion to temporarily support the blade. The supporting portion is made in one piece with the supporting part. The rotor assembly also comprises a number of first fasteners and second fasteners to fasten the blade root portion to the hub. The second fasteners are adapted to fasten the supporting part of the strengthener to the blade root portion when the latter is not fastened to the hub.

Later published WO 2016/040144 A1 shows a method for removing a rotor blade from atop a tower of a wind turbine, the method comprising: installing at least one up-tower pulley at an up-tower location of the wind turbine; attaching a pulley cable from a first ground winch over the up-tower pulley to the rotor blade; attaching a guide line from a second ground winch to an up-tower location of the wind turbine; attaching a guide pulley to the guide line, wherein the guide pulley is configured to move along the guide line; attaching a guide cable from the guide line over the guide pulley to the rotor blade so as to control an orientation of the rotor blade relative to the tower as the rotor blade is being lowered; and, lowering the rotor blade by coordinated winch operation to a location on or adjacent to a support surface of the wind turbine.

It is thus one object of the present invention to improve work safety during installation of wind turbines.

A coupling arrangement according to claim 1 is provided. According to a first aspect, a coupling arrangement in the field of wind turbines is provided. The arrangement comprises a blade root having a plurality of blade bolts, a hub having a plurality of bolt holes, the blade bolts being insertable in the bolt holes by moving the blade root and the hub towards each other in a mounting direction, and locking means for locking the blade root to the hub in a direction opposite to the mounting direction.

Advantageously, no technical personnel is needed in a nacelle during provisional fastening of the rotor blades, thus improving work safety during installation of wind turbines.

A wind turbine is a wind-driven generator for generating electricity.

A hub is the central rotating element of a rotor of the wind turbine. A blade bolt may be a threaded heavy-duty metal pin. The bolt holes are adapted to receive the blade bolts. The hub may comprise a blade bearing having the bolt holes.

The mounting direction is the direction of movement by which mounting is achieved.

In particular, locking means are separate elements (separate from the blade bolts and corresponding nuts) which correspond to each other and are adapted to be joined in a detachable way. "Locking" is to say that relative movement in a direction opposite to the mounting direction is prevented by a positive fit between locking elements.

The locking means comprise a first element and a second element, wherein the first element is engaged in or behind the second element for locking the blade root to the hub.

Self-locking means that the step of locking is obtained without human intervention at least from within the hub, or without any human intervention at all.

The locking means are spring loaded for self-locking.

In particular, spring loaded stands for loaded or secured by means of spring tension or compression.

According to a further embodiment, the locking means comprise an actuator, in particular an electromagnetic or hydraulic actuator.

The actuator may be remote controlled by a user outside the hub or fully automatic (using appropriate sensors).

The blade root has protruding elements protruding further in the mounting direction than the blade bolts, each of the protruding elements having one of the first or second element and the hub having the respective other one of the first or the second element.

Advantageously, different combinations of first and second elements are conceivable as locking means for different installation situations.

According to a further embodiment, the protruding elements are configured as protruding blade bolts insertable in the blade holes by moving the blade root and the hub towards each other in the mounting direction.

According to a further embodiment, the first or second element is spring loaded in a direction perpendicular to the mounting direction for engaging the respective other one of the first or second element.

According to a further embodiment, the actuator actuates the first or second element in a direction perpendicular to the mounting direction for engaging the respective other one of the first or second element.

Perpendicular means being at right angles to a given direction and preferably includes deviations from said direction of +/- 20 degrees, more preferably +/- 5 degrees.

According to a further embodiment, the first element is configured as at least one movable pin, and the second element is configured as a stopping surface for engaging the movable pin.

A stopping surface is a surface acting as a mechanical end stop.

According to a further embodiment, the first element is configured as a rotatable arm and the second element is configured as a stopping surface for stopping the rotatable arm.

In particular, rotatable denotes being able to turn on a pivot, i.e. a shaft or pin.

According to a further embodiment, the first element is a rotatable lobe and the second element is a corresponding engaging surface.

For example, a lobe may be a curved or rounded element, e.g. a cam-shaped element.

According to a further embodiment, the first element is a rotatable hook and the second element is a corresponding surface engageable by the hook.

For example, a hook may be a curved or bent element for catching or holding.

According to a further embodiment, the first element is a toothed element and the second element is a corresponding toothed element for meshing with the toothed element.

In particular, toothed means having pointed projections (teeth) on an edge or surface.

Any embodiment of the first aspect may be combined with any embodiment of the first aspect to obtain another embodiment of the first aspect.

According to a second aspect, a wind turbine comprising the coupling arrangement is provided.

Upon mounting, each blade to be mounted on the wind turbine is provisionally locked by such a coupling arrangement, disabling the respective blade to be retracted in the direction opposite to the mounting direction.

According to a third aspect, a method for assembling the coupling arrangement is provided. The method comprises the steps of a) moving the blade root and the hub towards each other, b) locking the blade root to the hub in the direction opposite to the mounting direction by use of the locking means, and c) fastening nuts to the blade bolts.

The embodiments and features described with reference to the arrangement of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows, in a section view II-II from Fig. 1, a coupling arrangement according to an embodiment;
Fig. 3 shows an enlarged view III from Fig. 2;
Figs. 4 to 18 show various embodiments of coupling arrangements; and
Fig. 19 shows a flow chart of a method according to an embodiment.

In the figures, like reference numerals designate like or functionally equivalent elements, unless otherwise indicated.

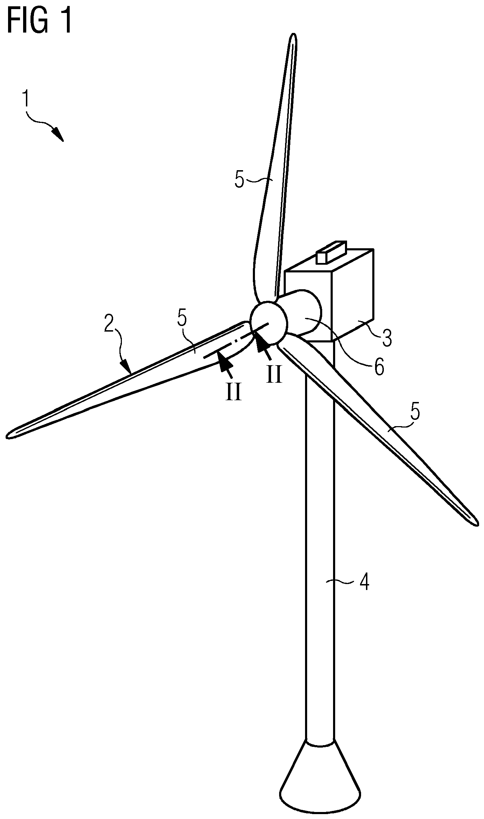

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1 and is preferably rotatable around a rotational axis of the tower 4.

The rotor 2 comprises three blades 5, preferably with an adjustable pitch. The blades 5 are connected to a hub 6 of the wind turbine 1. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials.

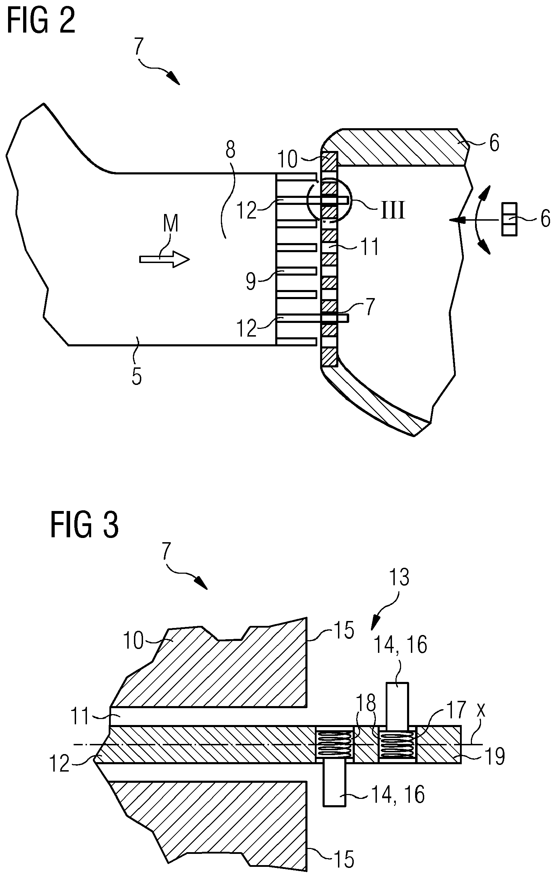

Fig. 2 shows, in a partial section view II-II from Fig. 1, a process step during the assembly of a coupling arrangement 7 according to an embodiment.

The coupling arrangement 7 comprises a blade root 8 and blade bolts 9 extending in parallel from the blade root 8. Further, the coupling arrangement 7 comprises the hub 6 having a blade bearing 10. Parallel bolt holes 11 extend through the blade bearing 10. In addition to the blade bolts 9, the blade root 8 has protruding elements 12 protruding further in a mounting direction M than the blade bolts 9. In the present example, the protruding elements 12 are formed as parallel protruding bolts.

The coupling arrangement 7 further comprises locking means 13 shown in Fig. 3, an enlarged view III from Fig. 2. The locking means 13 comprise first elements 14 and second elements 15.

In the present example, the first elements 14 are formed as pins 16 biased by respective springs 17 in a direction perpendicular to the protruding bolt axis X and the mounting direction M. The pins 16 and associated springs 17 are arranged in recesses 18 at the free end 19 of the protruding bolt 12.

According to the present embodiment, the second elements 15 are formed as stopping surfaces which are engaged by the pins 16 in their extended position when the protruding bolt 12 retracts in a direction opposite to the mounting direction M.

In a process step prior to the process step shown in Fig. 2, the blade root 8 is positioned relative to the hub 6 such that the blade bolts 9 and protruding blade bolts 12 are aligned with corresponding bolt holes 11, respectively.

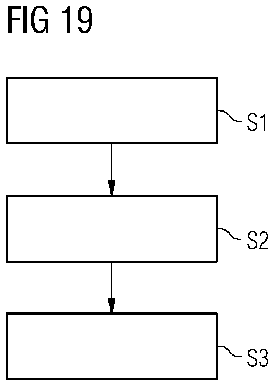

In a further step S1 (see Fig. 19), the blade root 8 is moved towards the hub 6 in the mounting direction M. Then, the protruding bolts 12 enter respective bolt holes 11 on the outer side of the blade bearing 10. As a result, the pins 16, initially in their extended position, are depressed. Then, the free end 19 exits the bolt holes 11 on the inner side of the blade bearing 10 and the pins snap into their extended position (Fig. 3) due to the springs 17, i.e. without further human interaction (herein referred to as self-locking). As a result, the pins 16 together with the stopping surfaces 15 lock the blade root 8 with respect to the hub 6 in a direction opposite the mounting direction M (step S2 in Fig. 19), i.e. the blade root 8 cannot move further away from the hub 6 than the pins 16 and stopping surfaces 15 allow.

The blade bolts 9 enter their corresponding bolt holes 11 shortly after the protruding blade bolts 12. This is a result of the protruding blade bolts 12 being longer than the blade bolts 9, for example by 1 to 20 cm. The protruding blade bolts 12 provide guidance for the blade bolts 9 to be threaded into their corresponding bolt holes 7. At the point in time when the pins 16 snap into their extended position after passing the blade bearing 10, the blade bolts 9 preferably also extend past the inside surface of the blade bearing 10, i.e. the blade bolts 9 extend through and past the bolt holes 11.

Now, skilled personnel can safely enter the hub 6 (the circular opening inside the blade bearing 10 is substantially closed by the blade root 8) and attach nuts 22 (Fig. 1) to the ends of the blade bolts 9. Once the nuts are tightened in a step S3 (see Fig. 19), the blade root 8 is securely attached to the hub 6.

In the following, different examples of coupling arrangements 7 are depicted, each of which comprising locking means 13 including at least one first element 14 and at least one second element 15 to be engaged with each other. Each of the depicted locking means 13 represents a way of locking protruding elements 12 of the blade root 8 to the hub 6 in a direction opposite to the mounting direction M.

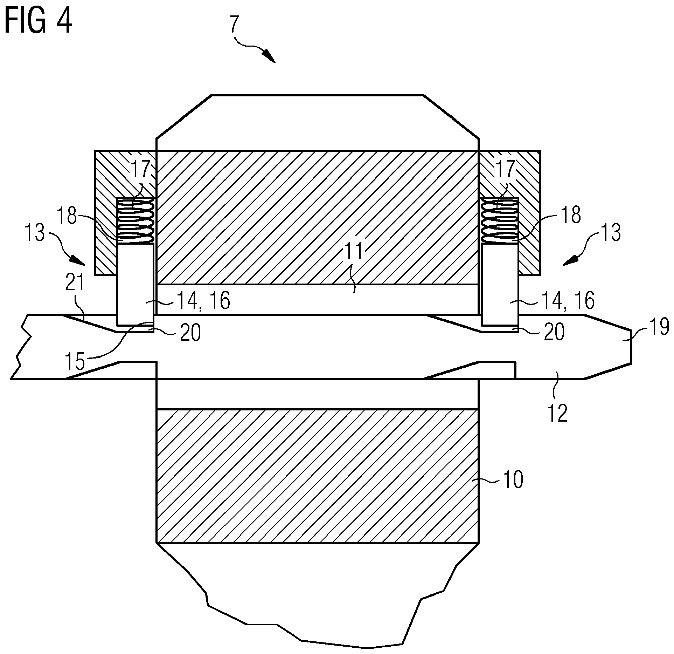

Fig. 4 shows a sectional view of a further embodiment of a coupling arrangement 7.

The protruding blade bolt 12 is received by the corresponding bolt hole 7. At respective edges of the two openings of the corresponding bolt hole 11, movable pins 16 (alternatively only one) and associated springs 17 are provided in guides arranged at the blade bearing 10. The springs 17 bias the pins 16 in a direction perpendicular to the mounting direction M towards the protruding blade bolt 12.

The protruding blade bolt 12 includes two (alternatively only one) circumferential recesses 20 which are arranged at such longitudinal positions in order to receive the two movable pins 16 (first elements) simultaneously. The recesses 20 comprise a slope 21 and a stopping surface 15 (second element) for engaging a corresponding pin 16. The stopping surface 15 is associated with a shoulder of the protruding element 12. Due to the slope 21, the depth of the recesses 20 steadily decreases in the direction opposite the mounting direction M. Thus, the protruding blade bolt 12 depresses the pins 16 on entering and exiting the corresponding bolt hole 11. When this movement of the protruding blade bolt 12 continues in the mounting direction M, the recesses 20 are positioned being positioned opposite the pins 16 respectively. Now, the pins 16 snap back into their extended position and into the recesses 20. Therein, a respective stopping surface 15 cooperates with a respective pin 16 to prevent any movement of the blade root 8 away from the hub 6, i.e. against the mounting direction M. When the nuts (not shown) at the bolts 12 are tightened to fixedly attach the blade root 8 to the hub, the slopes 21 allow for the protruding blade bolt 12 to move further in the mounting direction M. As a result, the pins 16 are depressed and may exit the recesses 20 completely at some point.

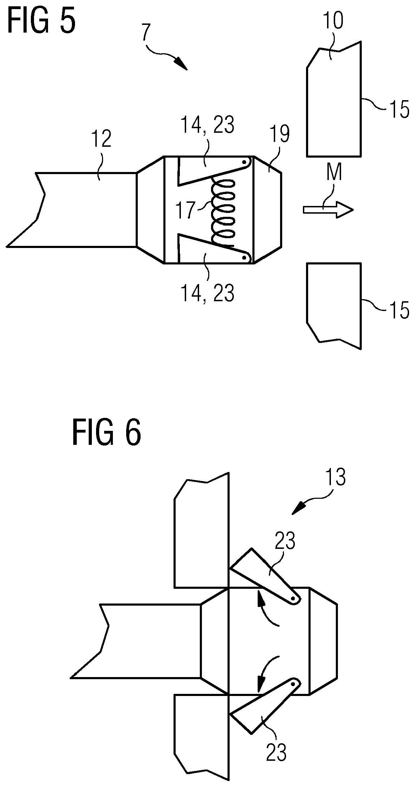

Figs. 5 and 6 show a section view of a further embodiment of a coupling arrangement 7 similar to the embodiment of Fig. 3. The protruding blade bolt 12 includes two rotatable arms 23 which are provided at the free end 19. The rotatable arms 23 are spring loaded by spring 17 in a direction perpendicular to the mounting direction M. In Fig. 5 the arms 23 are folded into the protruding blade bolt 12 (which usually occurs when the protruding blade bolt 12 enters the corresponding bolt hole 11). In Fig. 6 the arms 23 are unfolded laterally and engaged with the stopping surfaces 15 at the blade bearing 10 after the free end 19 of the protruding bolt 12 exits from the bolt hole 11.

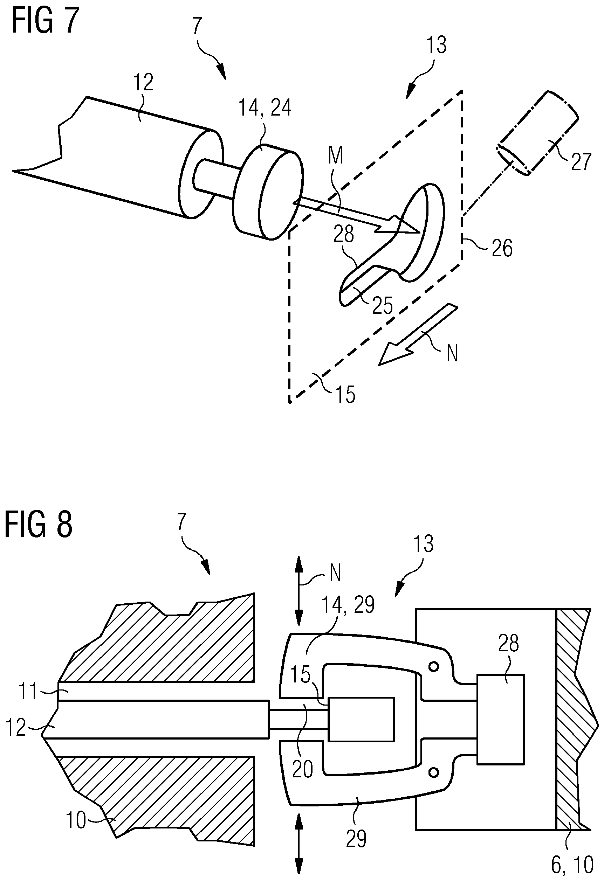

Fig. 7 shows a sectional view of a further embodiment of a coupling arrangement 7.

The protruding blade bolt 12 has an extension 24 with a T-shaped cross-section. Once the extension 24 exits the corresponding bolt hole 11 (see e.g. Fig. 1) and has passed through a key hole 25 in a plate 26, plate 26 is moved by an actuator 27, e.g. an electromagnet, in a direction N perpendicular to the mounting direction M such that a stopping surface 15 of the plate 26 bordering on a portion 28 having a reduced breadth of the keyhole 24 engages the extension 24. The plate 26 is supported such in the hub 6 or at the blade bearing 10 that it can be moved in the direction N but is fixed in the direction opposite to the mounting direction M. The actuator 27 may be configured to be controlled by a user from remote, in particular from outside the hub 6. Further, the actuator 27 may work fully automatically - to this end, the actuator 27 may comprise a sensor for sensing the presence of the protruding blade bolt 12. When sensing the protruding blade bolt 12, the actuator moves the plate 26 without any human intervention. These principles apply to all actuators mentioned herein.

Fig. 8 shows a partial section view of a further embodiment of a coupling arrangement 7.

The protruding bolt 12 has a circumferential recess 20 comprising a stopping surface 15. Once the recess 20 exits from the bolt hole 11 in the mounting direction M, claws 29 engage the recess 20 and thereby the stopping surface 15. The claws 29 are operated by an, e.g. electromagnetic or hydraulic, actuator 27. The claws 29 and/or the actuator 27 may be attached to the hub 6 or the blade bearing 10. The claws 29 in cooperation with the stopping surface 15 prevent the blade root 8 from retracting in a direction opposite the mounting direction M.

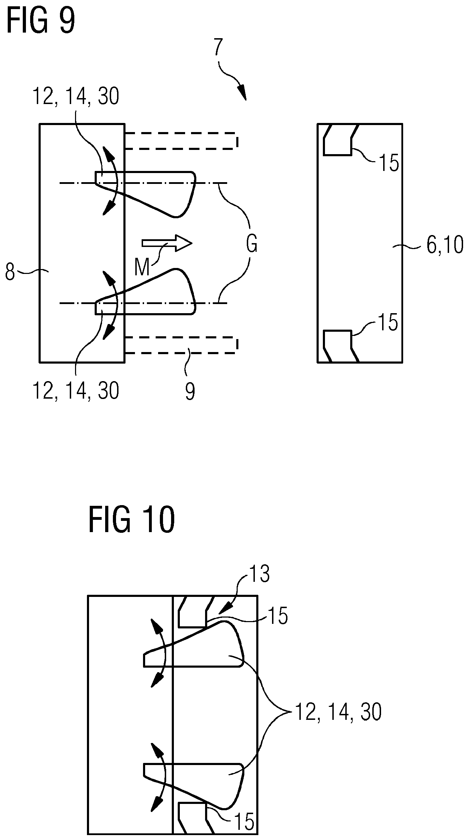

Figs. 9 and 10 show section views of a further embodiment of a coupling arrangement 7.

The protruding elements 12 are formed as lobes 30 respectively held rotatably about an axis G (the axis G being orientated parallel to the mounting direction M) at the blade root 8. Protruding bolts 12 are not required in this example but may be provided. Once the blade root 8 has been moved towards the hub 6 in the mounting direction M to an extent where the blade bolts 9 have passed through corresponding bolt holes 11 (not shown), the lobes 30 are rotated (by an actuator, not shown) about respective axes G upon which they become respectively engaged with stopping surfaces 15 provided at the hub 6 or the blade bearing 10. Thus, the lobes 30 in cooperation with the stopping surfaces 15 prevent the blade root 8 from retracting in a direction opposite the mounting direction M.

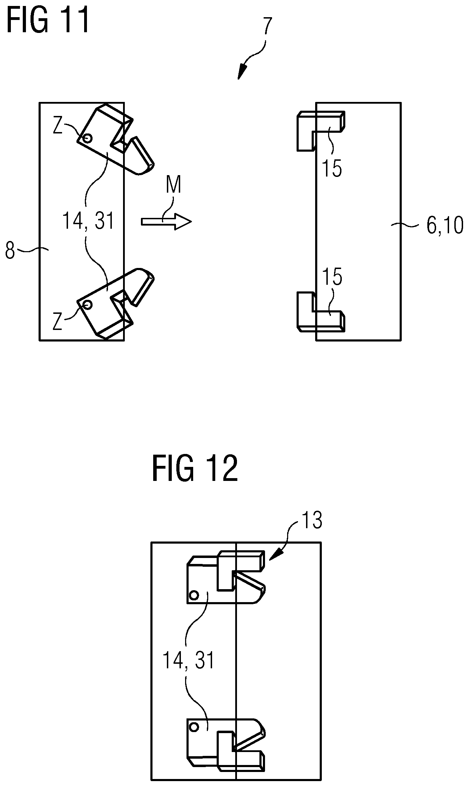

The embodiment of Figs. 11 and 12 is similar to Figs. 9 and 10.

Hooks 31 are respectively provided rotatably about an axis Z perpendicular to the mounting direction M at the blade root 8. Once the blade root 8 has been moved towards the hub 6 in the mounting direction M to an extent where the blade bolts 9 have passed through corresponding bolt holes 11 (not shown), the hooks 31 are rotated about the axes Z and become engaged with stopping or engaging surfaces 15 at the hub 6 or blade bearing 10.

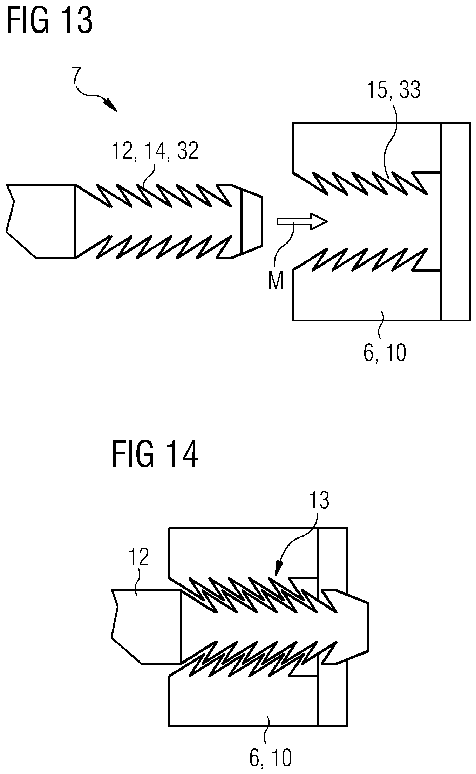

Figs. 13 und 14 illustrate an embodiment of a coupling arrangement 7, wherein a protruding blade bolt 12 is provided with teeth 32 (first element) which become engaged with corresponding teeth 33 (second element) at the hub 6 or blade bearing 10 once the blade root 8 has been moved towards the hub 6 in the mounting direction M to an extent where the blade bolts 9 have passed through corresponding bolt holes 11.

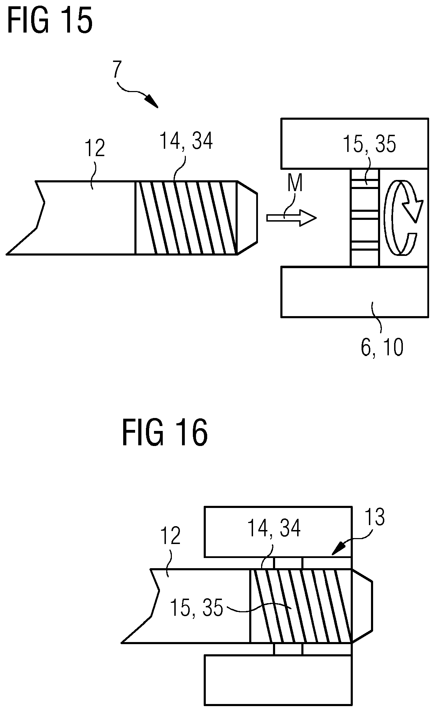

Figs. 15 und 16 illustrate an embodiment of a coupling arrangement 7, wherein a protruding blade bolt 12 is provided with a threaded portion 34 (first element) which is engaged by a nut 35 (second element) provided at the hub 6 or blade bearing 10 once the blade root 8 has been moved towards the hub 6 in the mounting direction M to an extent where the blade bolts 9 have passed through corresponding bolt holes 11. The nut 35 may be rotated by an actuator (not shown) for engagement with the threaded portion 34.

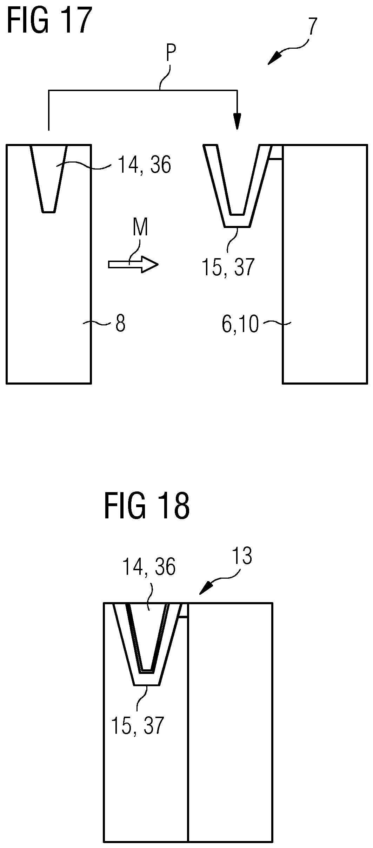

In the embodiment of Figs. 17 and 18 the coupling arrangement 7 comprises a blade root 8 having a V-shaped element 36 (first element) and a hub 6 or blade bearing 10 having a corresponding V-shaped recess 37 (second element). The V-shaped element 36 is moved along path P to become engaged with the corresponding V-shaped recess 37 once the blade root 8 has been moved towards the hub 6 in the mounting direction M to an extent where the blade bolts 9 have passed through corresponding bolt holes 11.

Although the present invention has been described in accordance with preferred embodiments, it is obvious for the person skilled in the art that modifications are possible in all embodiments.

## Claims

1. A coupling arrangement (7) in the field of wind turbines (1) comprising
a blade root (8) having a plurality of blade bolts (9),
a hub (6) having a plurality of bolt holes (11), the blade bolts (9) being insertable in the bolt holes (11) by moving the blade root (8) and the hub (6) towards each other in a mounting direction (M), and
locking means (13) for locking the blade root (8) to the hub (6) in a direction opposite to the mounting direction (M),
wherein the locking means (13) comprise a first element (14) and a second element (15), wherein the first element (14) is engageable in or behind the second element (15) for locking the blade root (8) to the hub (6), **characterized in that** the blade root (8) has protruding elements (12) protruding further in the mounting direction (M) than the blade bolts (9), each of the protruding elements (12) having one of the first or the second element (14, 15) and the hub (6) having the respective other one of the first or the second element (14, 15), and
wherein the locking means (13) are spring loaded for self-locking.

2. The coupling arrangement according to claim 1, wherein the locking means (13) comprise an actuator (27), in particular an electromagnetic or hydraulic actuator.

3. The coupling arrangement according to claim 1, wherein the protruding elements (12) are configured as protruding blade bolts insertable in the blade holes (11) by moving the blade root (8) and the hub (6) towards each other in the mounting direction (M).

4. The coupling arrangement according to one of claims 1 - 3, wherein the first or second element (14, 15) is spring loaded in a direction perpendicular to the mounting direction (M) for engaging the respective other one of the first or second element (14, 15).

5. The coupling arrangement according to one of claims 2 - 4, wherein the actuator (27) actuates the first or second element (14, 15) in a direction perpendicular (N) to the mounting direction (M) for engaging the respective other one of the first and second element (14, 15).

6. The coupling arrangement according to one of claims 1 - 5, wherein the first element (14) is configured as at least one movable pin (16), and the second element (15) is configured as a stopping surface for engaging the movable pin (16).

7. The coupling arrangement according to one of claims 1 - 5, wherein the first element (14) is configured as a rotatable arm (23) and the second element (15) is configured as a stopping surface for engaging the rotatable arm (23).

8. The coupling arrangement according to one of claims 1 - 5, wherein the first element (14) is a rotatable lobe (30) and the second element (15) is a corresponding engaging surface.

9. The coupling arrangement according to one of claims 1 - 5, wherein the first element (14) is a rotatable hook (31) and the second element (15) is a corresponding surface engageable by the hook (31) or wherein the first element (14) is a toothed element (32) and the second element (15) is a corresponding toothed element (33) for meshing with the toothed element (32).

10. A wind turbine (1) comprising the coupling arrangement (7) of one of claims 1 - 9.

## Patentansprüche

1. Verbindungsanordnung (7) auf dem Gebiet von Windenergieanlagen (1), die Folgendes umfasst:
eine Blattwurzel (8) mit mehreren Blattbolzen (9),
eine Nabe (6) mit mehreren Bolzenlöchern (11), wobei sich die Blattbolzen (9) in die Bolzenlöcher (11) einführen lassen, indem die Blattwurzel (8) und die Nabe (6) in einer Befestigungsrichtung (M) aufeinander zu bewegt werden, und
Verriegelungsmittel (13) zum Verriegeln der Blattwurzel (8) in einer der Befestigungsrichtung (M) entgegengesetzten Richtung an der Nabe (6),
wobei die Verriegelungsmittel (13) ein erstes Element (14) und ein zweites Element (15) umfassen, wobei das erste Element (14) zwecks Verriegeln der Blattwurzel (8) an der Nabe (6) in das zweite Element (15) oder dahinter eingreifen kann,
**dadurch gekennzeichnet, dass** die Blattwurzel (8) vorstehende Elemente (12) aufweist, die in Befestigungsrichtung (M) weiter vorstehen als die Blattbolzen (9), wobei jedes der vorstehenden Elemente (12) das erste oder das zweite Element (14, 15) und die Nabe das jeweils andere Element (14, 15) aufweist, und
wobei die Verriegelungsmittel (13) zwecks Selbstsicherung federbelastet sind.

2. Verbindungsanordnung nach Anspruch 1, wobei die Verriegelungsmittel (13) ein Stellglied (27), insbesondere ein elektromagnetisches oder hydraulisches Stellglied, umfassen.

3. Verbindungsanordnung nach Anspruch 1, wobei die vorstehenden Elemente (12) als vorstehende Blattbolzen konfiguriert sind, die sich in die Blattlöcher (11) einführen lassen, indem die Blattwurzel (8) und die Nabe (6) in Befestigungsrichtung (M) aufeinander zu bewegt werden.

4. Verbindungsanordnung nach einem der Ansprüche 1 bis 3, wobei das erste oder das zweite Element (14, 15) zwecks Eingreifen in das jeweils andere Element (14, 15) in einer zur Befestigungsrichtung (M) senkrechten Richtung federbelastet ist.

5. Verbindungsanordnung nach einem der Ansprüche 2 bis 4, wobei das Stellglied (27) das erste oder das zweite Element (14, 15) zwecks Eingreifen in das jeweils andere Element (14, 15) in einer zur Befestigungsrichtung (M) senkrechten Richtung (N) betätigt.

6. Verbindungsanordnung nach einem der Ansprüche 1 bis 5, wobei das erste Element (14) als mindestens ein beweglicher Stift (16) und das zweite Element (15) als Anschlagfläche zum Anliegen des beweglichen Stifts (16) konfiguriert ist.

7. Verbindungsanordnung nach einem der Ansprüche 1 bis 5, wobei das erste Element (14) als drehbarer Arm (23) und das zweite Element (15) als Anschlagfläche zum Anliegen des drehbaren Arms (23) konfiguriert ist.

8. Verbindungsanordnung nach einem der Ansprüche 1 bis 5, wobei es sich bei dem ersten Element (14) um eine drehbare Nase (30) und bei dem zweiten Element (15) um eine entsprechende Anlagefläche handelt.

9. Verbindungsanordnung nach einem der Ansprüche 1 bis 5, wobei es sich bei dem ersten Element (14) um einen drehbaren Haken (31) und bei dem zweiten Element (15) um eine entsprechende Fläche handelt, die der Haken (31) in Eingriff nehmen kann, oder wobei es sich bei dem ersten Element (14) um ein verzahntes Element (32) und bei dem zweiten Element (15) um ein zum Eingreifen in das verzahnte Element (32) entsprechend verzahntes Element (33) handelt.

10. Windenergieanlage (1) mit der Verbindungsanordnung (7) nach einem der Ansprüche 1 bis 9.

## Revendications

1. Agencement de couplage (7) dans le domaine des éoliennes (1) comprenant
une emplanture de pale (8) ayant une pluralité de boulons de pale (9),
un moyeu (6) ayant une pluralité de trous de boulon (11), les boulons de pale (9) étant insérables dans les trous de boulon (11) en déplaçant l'emplanture de pale (8) et le moyeu (6) les uns vers les autres dans une direction de montage (M), et
des moyens de verrouillage (13) destinés à verrouiller l'emplanture de pale (8) avec le moyeu (6) dans une direction opposée à la direction de montage (M),
dans lequel les moyens de verrouillage (13) comprennent un premier élément (14) et un deuxième élément (15), dans lequel le premier élément (14) peut se mettre en prise dans ou derrière le deuxième élément (15) destiné à verrouiller l'emplanture de pale (8) avec le moyeu (6),
**caractérisé en ce que** l'emplanture de pale (8) a des éléments en saillie (12) faisant saillie plus dans la direction de montage (M) que les boulons de pale (9), chacun des éléments en saillie (12) ayant l'un du premier ou du deuxième élément (14, 15) et le moyeu (6) ayant l'autre respectif du premier ou du deuxième élément (14, 15), et
dans lequel les moyens de verrouillage (13) sont chargés par ressort en vue d'un autoverrouillage.

2. Agencement de couplage selon la revendication 1, dans lequel les moyens de verrouillage (13) comprennent un actionneur (27), en particulier un actionneur électromagnétique ou hydraulique.

3. Agencement de couplage selon la revendication 1, dans lequel les éléments en saillie (12) sont configurés en tant que boulons de pale faisant saillie insérables dans les trous de pale (11) en déplaçant l'emplanture de pale (8) et le moyeu (6) l'un vers l'autre dans la direction de montage (M).

4. Agencement de couplage selon l'une des revendications 1-3, dans lequel le premier ou le deuxième élément (14, 15) est chargé par ressort dans une direction perpendiculaire à la direction de montage (M) pour se mettre en prise avec l'autre respectif du premier ou du deuxième élément (14, 15).

5. Agencement de couplage selon l'une des revendications 2-4, dans lequel l'actionneur (27) actionne le premier ou le deuxième élément (14, 15) dans une direction perpendiculaire (N) à la direction de montage (M) pour se mettre en prise avec l'autre respectif du premier et du deuxième élément (14, 15).

6. Agencement de couplage selon l'une des revendications 1-5, dans lequel le premier élément (14) est configuré en tant qu'au moins une broche mobile (16), et le deuxième élément (15) est configuré en tant que surface de butée destinée à se mettre en prise avec la broche mobile (16).

7. Agencement de couplage selon l'une des revendications 1-5, dans lequel le premier élément (14) est configuré en tant que bras rotatif (23) et le deuxième élément (15) est configuré en tant que surface de butée pour se mettre en prise avec l'arbre rotatif (23).

8. Agencement de couplage selon l'une des revendications 1-5, dans lequel le premier élément (14) est un lobe rotatif (30) et le deuxième élément (15) est une surface de mise en prise correspondante.

9. Agencement de couplage selon l'une des revendications 1-5, dans lequel le premier élément (14) est un crochet rotatif (31) et le deuxième élément (15) est une surface correspondante pouvant être mise en prise par le crochet (31) ou dans lequel le premier élément (14) est un élément denté (32) et le deuxième élément (15) est un élément denté correspondant (33) destiné à s'enclencher avec l'élément denté (32).

10. Eolienne (1) comprenant l'agencement de couplage (7) de l'une des revendications 1-9.
